# EUROPEAN PATENT SPECIFICATION

(11) **EP 2 192 126 B1**
(45) Date of publication and mention of the grant of the patent: **27.03.2013**
(21) Application number: 08075904.6
(22) Date of filing: 26.11.2008
(51) Int. Cl.: C07F 9/38

(54) **Process for making zoledronic acid**
Verfahren zur Herstellung von Zoledronsäure
Procédé de fabrication d'acide zolédronique

(43) Date of publication of application: 02.06.2010
(73) Proprietor: Synthon B.V., 6545 CM Nijmegen (NL)
(72) Inventor: Kás, Martin, 110 00 Prague 1 (CZ); Benes, Michal, 738 01 Frýdek-Mistek (CZ); Pis, Jaroslav, 100 00 Prague 10 (CZ)
(74) Representative: van den Broek, Ludovicus A.G.M.

(56) References cited:
- WO-A-03/097655
- WO-A-2005/063717
- WO-A1-2008/056129
- US-A- 5 908 959

## Description

### BACKGROUND OF THE INVENTION

Zoledronic acid is an active pharmaceutical ingredient that inhibits bone resorption and is used in certain oncology treatments and in treating Paget's disease of bone. Zoledronic acid is chemically (1-hydroxy-2-imidazol-1-yl-phosphonoethyl) phosphonic acid and can be represented by the general formula (1). 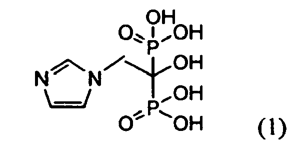 This compound has been disclosed in U.S. 4,939,130.

Biphosphonic acids including zoledronic acid have generally been made by reacting a corresponding acid in a solvent (or in a diluent) at enhanced temperatures with a phosphonation agent followed by hydrolysis to form the biphosphonic acid. The phosphonation agent may be, inter alia, a mixture of phosphorous acid and a halophosphorous compound (such as phosphorous trichloride PCl₃, phosphorous pentachloride PCl₅, phosphorous oxychloride POCl₃, and the like). The result of the phosphonation is generally believed to be a complex mixture of cyclic pyrophosphonate intermediates (the nature of which has been suggested, e.g., in US 5,510,517). The hydrolysis is typically performed by heating the mixture with water or a non-oxidizing aqueous acid to form the corresponding biphosphonic acid. The obtained biphosphonic acid is then optionally isolated, or is optionally converted into a corresponding salt and then isolated.

In the case of zoledronic acid corresponding starting acid is an imidazo-substituted acetic acid of the formula (2)

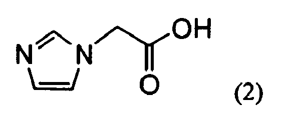

In the original process disclosed in U.S. 4,939,130 for making zoledronic acid, the hydrochloride of the compound (2) reacts with phosphorous trichloride and phosphoric acid in chlorobenzene at about 100°C. Boiling of the reaction mass with concentrated hydrochloric acid and dilution with acetone gave zolendronic acid in 41% yield. The process was later improved in WO 2005/063,717 wherein the reaction between the imidazo(-1-yl acetic acid (2) and orthophosphoric acid was carried out with a controlled addition of PCl₃ and at lower temperatures (50-80°C) in a hydrocarbon or a chlorinated hydrocarbon solvent.

The use of chlorinated solvents is not suitable for an industrial process because of extreme toxicity of them; these solvents are classified as compounds, the presence of which in the manufactured product must be extremely low. Therefore, specific means must be applied in the elaboration of the reaction mixture and purification of the product, for to minimize the content of traces of solvents under the prescribed limits.

The use of non-chlorinated hydrocarbons avoids these disadvantages, but the yield of the product appears to dramatically decrease as shown in Ex 2 of WO 2005/063,717, in which the yield is only 58%.

WO 03/093282 is focused on solving the problem of bad stirrability of the reaction mixture by using ionic solvents. However, in case of zoledronic acid, this process suffers from very low yields (25 %, see Ex 2) and is thus not optimal for industrial scale.

WO 2006/134603 shows the use of aliphatic hydrocarbons or water miscible cyclic ethers such as n-octane or 1,4-dioxane, respectively. But the yields of the zoledronic acids are reduced, being about 60% (n-octane) or about 50% (dioxane).

WO 03/097,655 uses a silicon fluid or an aromatic hydrocarbon as a diluent for the reaction. The yields vary from 60 to 80%. However, long reaction times (11 to 34 hours in the phosphonation step, 16 to 19 hours in the hydrolysis step) are less desirable in a large scale reaction process as it limits the overall capacity of the reaction equipment.

US 5,908,959 relates to a process for the production of 4-amino-1-hydroxy butylidene-1,1-bis phosphonic acids or salts thereof.

4-aminobutyric acid is reacted with a phosphonation agent in a solvent of a poly(alkyleneglycol) or its derivatives. The phosphorous intermediate formed is hydrolyzed by the addition of water. The product is to be separated from the aqueous phase from the formed biphosphasic liquid system. Application of this process in the making of zolendronic acid results in the formation of a very viscous reaction mixture, see comparative example 2.

WO 2008/056129 relates to the preparation of bisphosphonic acids and salts thereof. For instance, a mixture of 1-imidazolyl acetic acid is reacted with phosphoric acid in N,N'-dimethylethylene urea. After completion of the reaction water is added, the reaction mixture cooled and the pH adjusted to pH 8 to 9. Subsequently, after filtration is the pH adjusted to pH 1.5 to 2, ethanol added and product obtained by precipitation whereafter the product is filtered, washed and dried.

As seen above, a key issue in the general synthesis of zoledronic acid has been finding a good solvent for the reaction of the acid (2) with the phosphonating agent. In general, the main problems in the known synthetic process are high viscosity and, in some embodiments, the polyphasic character of the reaction mixture comprising the cyclic pyrophosphonate intermediates, which can lead to bad heat transfer and ultimately problems with subsequent work-up and formation of side products arising from the excess of the phosphonation agents. These disadvantages are especially manifested/exaggerated in a large scale production.

Thus, there is a need to improve the conditions of reaction between the compound of formula (2a) and the phosphonation agent yielding the biphosphonates of the formula (1). In particular, there is a need to find a solvent/diluent, in which the phosphonylation reaction proceeds with a high yield and under technologically acceptable conditions.

### SUMMARY OF THE INVENTION

The present invention provides a useful process for making zoledronic acid including salts and/or hydrates thereof. A first aspect of the present invention relates to a process, which comprises:
reacting in a solvent/diluent a compound of formula (2) or a salt thereof 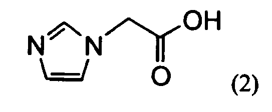 with a phosphonation agent to form phosphonated intermediates; and subsequently
hydrolyzing said intermediates to form a compound of formula (1) or a salt or hydrate thereof 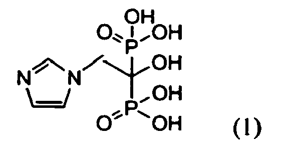
wherein said solvent/diluent comprises a mixture of (i) a polyalkylene glycol and (ii) a cyclic carbonate of the formula (3) 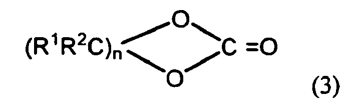 wherein n is an integer from 2 to 4 and R¹ and R² each independently represent a hydrogen or a C 1-C4 alkyl group. Typically, the compound of formula (3) is a propylene carbonate of the formula (3a) 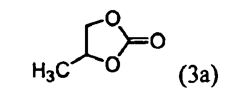 and the polyalkylene glycol is a polyethylene glycol, particularly of the relative molecular mass between about 200 to about 1000. The ratio of the compound (3) and the polyalkylene glycol is from 5:1 to 1:2 (v/v), preferably from 4:1 to 1:1 (v/v) and most preferably from 3:1 to 4:3 (v/v). The phosphonation agent is typically a combination of phosphorous acid and a halophosphorous compound, preferably phosphorous trichloride. The reaction temperature is generally from about 40°C to 80°C, more preferably around 50-65°C. The relative amount of the solvent is advantageously 2 to 10 volumes based on weight of the acid of the formula (2); e.g., 2-10 ml/g of formula (2). Generally, the hydrolyzing step comprises contacting the intermediates with water, preferably at a temperature higher than 50°C. The process typically further comprises isolating the compound of formula (1) or a salt or hydrate thereof, such as by precipitation.

Another aspect of the invention relates to the use of the compound (2) with less than 0.5 % of the dicarboxylic impurity of the formula (2b) 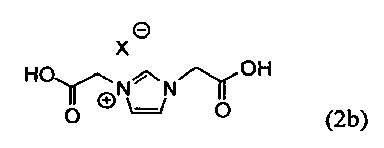 wherein X represents a counterion.

### DETAILED DESCRIPTION OF THE INVENTION

The present invention is based, in part, on the discovery that a mixture of a polyalkylene glycol and a cyclic carbonate of formula (3) can provide an advantageous solvent/diluent in which to carry out the phosphonation reaction step in the preparation of zoledronic acid. The advantages of the solvent/diluent system can include low cost, low toxicity and ease of availability. In addition, the reaction mixture can remain an easily stirrable fluid throughout the reaction, thus allowing for good control of the reaction, easy upscaling, and simple isolation resulting in good yields and purity of the product.

The solvent/diluent system of the present invention comprises a mixture of the compound of the formula (3) and a liquid polyalkylene glycol. 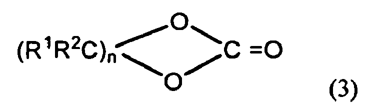 In formula (3), n represents an integer from 2 to 4, and R¹ and R² each independently represent a hydrogen or a C 1-C4 alkyl group. The independency of the representation applies to each ring carbon atom as well; i.e., when n = 4, the four R¹ groups do not have to be the same but are each independently selected from hydrogen and alkyl groups. Of all of the R1 and R2 groups present, generally three or less, more typically 2 or less, represent a C1-C4 alkyl group; the remainder represent hydrogen. While the alkyl group can be any of methyl, ethyl, propyl, or butyl (the last two including branched as well as straight chain forms), generally the alkyl is methyl. Accordingly, an exemplary embodiment of the compound of formula (3) is a propylene carbonate of the following formula (3a), where n =2 and one of the R¹ and R²'s represents methyl.

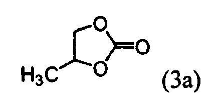

The polyalkylene glycol used in the present invention is typically a polyethylene glycol (PEG). The PEG used will generally have an average value of the relative molecular mass from about 200 to about 1000 or, alternatively, will have a melting point of between -40°C to + 40°C. A typical PEG for use in the solvent/diluent is PEG 400.

While generally a single compound of formula (3) (e.g., formula (3a)) and a single species of polyalkylene glycol (e.g., PEG 400) is used in the solvent/diluent composition of the invention, the use of multiple compounds and/or species is also embraced. For ease of description, however, the compounds are referred to in the singular (e.g., a mixture of PEG 400 and PEG 200 represents "a polyalkylene glycol").

The ratio of the compound (3), typically of the compound (3a), to the polyalkylene glycol is generally in the range from 5:1 to 1:2 (v/v), more typically from 4:1 to 1:1 (v/v) and usually from 3:1 to 4:3 (v/v), respectively. The solvent/diluent can comprise additional solvents and/or diluents, but conveniently consists of the compound of formula (3) and the polyalkylene glycol components. When additional solvents/diluents are present, the amount thereof is typically less than 30%, more typically less than 20%, and usually less than 10%, and preferably less than 5% of the total volume of the solvent/diluent composition.

The solvent/diluent composition or system of the present invention is a liquid, at least at the intended phosphonation reaction temperature. The composition can serve as both a solvent, i.e., reactants and products can be dissolved therein, and as a diluent, i.e., reactants and products can be suspended therein. The solvent/diluent system of the present invention provides a good reaction medium for carrying out the synthesis of zoledronic acid and salts thereof. In particular, the solvent/diluent system can provide good solubility of the reaction components at the beginning of the reaction and can prevent formation and/or accumulation of sticky and/or semi-solid precipitates in later stages of the reaction, which can build up on the equipment. Hence the reaction mixture remains a well stirrable suspension at later stages of the reaction. Since the formation and/or accumulation of semi-solid material in the course of phosphonation reaction is reduced and preferably avoided, the process can be easier, safer, and more economical on industrial scale, allowing for high yields and short reaction times.

Although both components of the solvent system are known to be used as solvents in making similar biphosphonic compounds, it has been discovered that their use individually in the synthesis of zoledronic acid (1) is less suitable. For example, polyalkylene glycol alone was suggested for the synthesis of alendronate in US 5908959 and WO 98 34940, but yields a very badly stirrable reaction mixture when used for making zoledronate, which, in turn, results in a low yield of the product after hydrolysis. Alkyl carbonates were generally suggested as solvents of choice in WO2006/045578; but using the teachings for making zoledronic acid causes a precipitate to be formed on walls of the reactor, which decreases the yield and the quality of the product. Thus, the finding that a mixture of both liquids, when used as a solvent for the phosphonation reaction corresponding to synthesizing zoledronic acid, provides the desired product with a good yield and purity is quite surprising.

The components of the solvent of the present invention are obtainable by methods known in the art and are commercially available.

The acid of the formula (2) 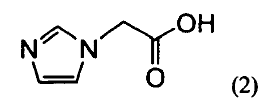 is a known compound. It may be used in the process of the present invention also as a metal salt, e.g., sodium salt; or as an acid addition salt, e.g., as a hydrochloride. The compound (2) may also be used in its ester form. The ester is typically derived from a condensing reaction with an aliphatic alcohol having 1 to 8 carbon atoms, resulting in a C1-C8 alkyl group. The subsequent hydrolysis step, optionally further including an additional hydrolysis treatment, can hydrolyze the ester group and thus remove the C1-C8 alkyl moiety.

The compound of the formula (2) may be prepared by a process comprising the following sequence: 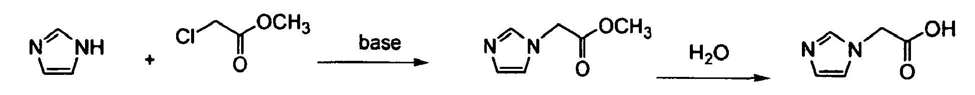 The compound (2) should preferably be essentially free (preferably less than 0.5%) of a diacid impurity (2b) 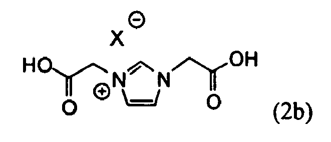 which is formed by the undesired alkylation of the second nitrogen of the imidazole by the haloacetate. The diacid impurity will react in the same manner with the phosphonation agent and thus yields impurities in the final product, which are difficult to remove.

The known process for making the compound (2) disclosed in WO2005/063717 yields an undesirably high amount of the diacid impurity. It has been found that the origin of the diacid impurity is particularly caused by the nature of the base used for the condensation of imidazole with the haloester. Weak bases such as amines or alkali metal carbonates are less suitable for this reaction. Preferred bases are strong bases that are able to convert essentially completely the imidazole compound into an imidazole anion, i.e., an imidazolide. Such a strong base includes a metal alcoholate, for instance potassium tert. butoxide, and a metal hydride, e.g. a sodium or lithium hydride. Alkylation of imidazolide, e.g. sodium imidazolide or potassium imidazolide, results in almost exclusive monoalkylation product, which upon hydrolysis gives the imidazoylacetic acid essentially free (less than 1.0 %, in some cases less than 0.5 %) of the diacid quaternary salt.

The use of a strong base in a process for making the compound of formula (2a) essentially free from the diacid impurity forms a particular aspect of the present invention.

The phosphonation agents, which can be single or complex compounds or reagents, are known in the art and typically are phosphorous acid and/or a halophosphorous compound; the latter is advantageously phosphorous trichloride PCl₃, phosphorous pentachloride PCl₅, phosphorous oxychloride POCl₃ and the like; and mixtures thereof. The use of PCl₃ has an advantage over using POCl₃ (or other P^{V} chlorinated reagents) in higher total amount of P^{III} species needed for the phosphonation reaction. Thus, phosphorous trichloride is the preferred halophosphorous compound.

When the phosphonation agent is phosphorous acid and a halophosphorous compound, the preferred molar ratio between the acid of the formula (2), phosphorous acid, and the halophosphorous compound is about 1: (1-5): (2-5), more preferably about 1: 3-4: 3-4.

The solvent/diluent system of the present invention comprising the mixture of the alkylene carbonate and the polyalkylene glycol, particularly the propylene carbonate and the polyethylene glycol, may be used in any practical amount, and advantageously is used in 2 to 10 volumes based on weight of the acid of the formula (2); i.e., 2-10 ml of solvent/diluent system per 1 g of acid of formula (2) or more simply 2-10ml/g.

The reaction between the compound of the formula (2) defined above and the phosphonation agent in the solvent/diluent system in the process of the present invention proceeds optimally at about 40°C to 80°C, more preferably at 50-65°C. The structure of the compounds produced by the reaction is not entirely clear and thus for simplicity is referred to herein as the "phosphonated intermediates." As mentioned above, however, it is believed that the phosphonated intermediates are a complex mixture of cyclic pyrophosphonate intermediates as suggested in US 5,510,517.

After the completion of the phosphonation reaction (i.e., the reaction of the compound (2) and the phosphonation agent), which may be monitored by a suitable analytical technique, e.g., a TLC or HPLC, the phosphonated intermediates are subjected to a hydrolytic reaction, which can be carried out in one or more treatments/conditions. Generally the entire reaction mixture is subjected to a hydrolytic reaction by contacting the reaction mixture with water. In this hydrolysis of the phosphonated intermediates, various reagents, particularly the halophosphorous compounds, are also decomposed. Advantageously, the above mixture of intermediates is treated by water at an enhanced temperature (advantageously higher than 50°C including reflux temperature) and for a prolonged time (e.g., for at least 2 hours). The reaction mixture may also be treated with a mixture of water and alcohol. A homogeneous organic/aqueous mixture is generally formed after the hydrolysis, wherein the product of the formula (1) stays dissolved in the mixture. Alternatively, the phosphonated intermediates can be isolated first from the reaction mixture and then subjected to hydrolysis to form the compound of formula (1).

The acid of the formula (1) 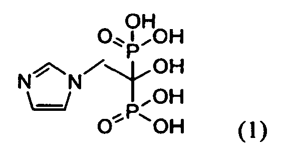 may be isolated from the reaction mixture after hydrolysis in solid state by a suitable precipitation process; advantageously, the aqueous reaction mixture is treated with a water miscible organic solvent, e.g. an alcohol, preferably methanol or ethanol; the temperature of the treatment is essentially ambient. A monohydrate of zoledronic acid exhibits very low solubility in such system and precipitates from the reaction mixture as a solid.

The reaction mixture may be also neutralized and/or alkalinized by a molar equivalent or a slight molar excess of an alkali (e.g., sodium/potassium hydroxide or carbonate), preferably to a pH of between 3.5 and 5. The biphosphonic acid (1) is isolated from the aqueous phase, dependent on the pH, as a solid hydrated acid or as a solid monovalent alkali metal (monosodium or monopotassium) salt by precipitation thereof after adding a water miscible organic liquid (an antisolvent) such as an aliphatic alcohol in which the salt is less soluble.

The precipitated solid product is filtered from the liquid medium, washed and optionally dried. Under the above conditions, the acid of formula (1) and/or its salts may be typically isolated in hydrated forms, which are preferably crystalline.

If necessary and/or desirable, the isolated crude solid product (an acid or a salt thereof) is then purified by a suitable process, e.g., by a recrystallization or by an extraction. It may be also converted into another acid/salt/ester form, including any of its hydrated or solvated forms. A suitable process of a purification of crude zoledronic acid monohydrate is, e.g., a recrystallization thereof from water, or, preferably, a dissolution thereof in water under action of an alkali (preferably alkali metal hydroxide or carbonate) to form a solution of a zoledronic acid salt, optionally treating the solution with a surface active material, and conversion of the zoledronic acid salt back to zoledronic acid, which precipitates from the solution, by an action of an acid.

The invention will be further described with reference to the following non-limiting examples.

### EXAMPLES

### Example 1

### Preparation of 2-(1H-imidazol-1-yl)acetic acid.

Potassium *t*-butoxide (34.46 g) was dissolved in 90 ml of dry tetrahydrofurane under nitrogen. To this solution imidazole (21.95 g) in 75 ml of THF was added gradually. Resulted potassium imidazolide was stirred at 40°C. To the suspension, 25.6 ml of methyl chloroacetate was added in three portions. Reaction mixture was heated to 40°C for 140 minutes. Formed inorganic salts were filtered off and washed with 20 ml of THF. To the combined filtrates 30 ml of water and 8 ml of 4M HCl were added. The mixture was heated to ebullition and organic solvents were distilled off. To the suspension 4.5 ml of triethylamine and 150 ml of methanol were added. The suspension was stirred for 8 hours at 22°C, then cooled to 5°C and stirred for 1 hour. The solid was filtered off, washed with 10 ml of MeOH and dried for 8 hours at 50°C to give 25.98 g (70.6%) of product. Content of diacid was 0.5 %.

### Example 2

### Preparation of 2-(1H-imidazol-1-yl)acetic acid.

Imidazole (200 g) was dissolved in tetrahydrofuran (600 ml). Jacketed reactor (4 L) was flushed with nitrogen and tetrahydrofuran (1 060 ml) was added. Potassium *t*-butoxide (339.9 g) was added through a funnel. The funnel and walls of the reactor were rinsed with tetrahydrofuran (140 ml). Content of the reactor was stirred for 15 minutes, cooled down to 0°C and the imidazole solution was slowly added. Temperature of the reaction mixture was adjusted to 7°C and methyl chloroacetate (302.9 g) was slowly added. The reaction mixture was stirred at 20-25°C for 2 hours. Formed solid inorganic salts were filtered; the filter cake was washed with tetrahydrofuran (1 x 300 ml and 1 x 150 ml). Combined filtrates (approx. 1 800 ml) were transferred to clean jacketed reactor and water (300 ml) was added. The reaction mixture was heated under stirring to start distillation. Approx. 1 800 ml of volatile solvents were distilled off. The reaction mixture was stirred at 88-98°C for additional 1.5 hr. The reaction mixture was then slowly cooled down to 25°C. In the course of cooling, when the temperature of the reaction mixture reached 50°C, methanol (1 050 ml) was added while continuing cooling. When the temperature of reaction mixture reached 25°C, pH of the crystalline suspension was adjusted to 4-5 by addition of 36% hydrochloric acid (approx. 45 ml). Suspension was cooled down to 0°C and stirred at -2 to 2°C for 120 minutes. Product was then filtered, washed with methanol (500 ml) in several portions. Wet cake was dried at 60-65°C for 10 hours to give 276.8 g of 2-(1*H* imidazol-1-yl)acetic acid. The product was analysed by HPLC: content of diacid 0.07%, HPLC purity 99.22%.

### Example 3

### Preparation of methyl 2-(1H-imidazol-1-yl)acetate.

Lithium hydride (2.58 g) was suspended in 50 ml of dry tetrahydrofurane under nitrogen. To this suspension a solution of imidazole (20.25 g) in THF (100 ml) was added gradually within 35 minutes. Lithium imidazolide was alkylated by addition of 26 ml of methyl chloroacetate solution in 45 ml THF. Following HPLC analysis showed monoalkylation of imidazole. Content of diester was 0.1 %

### Comparative example 1 -

### Preparation of 2-(1H-imidazol-1-yl)acetic acid, process related to WO2005/063717

Reaction flask was charged with imidazole (50 g), dimethylformamide (20 ml), toluene (200 ml), potassium carbonate (90 g) and potassium iodide (5 g). The mixture was stirred for 10 min and methyl chloroacetate (120 g, 97 ml) was added at 25-30°C over 1.5 hr. The mixture was stirred for 1 hour at 25-30°C, heated to 60-65°C and was stirred at this temperature for additional 3 hours. The mixture was cooled down to room temperature and ethyl acetate (100 ml) was added. The mixture was stirred for 20 min and upper organic layer was decanted. Ethyl acetate (100 ml) was added to the residue and the mixture was stirred for 20 min. Upper organic layer was decanted and combined with the first one. Water (100 ml) was added to the residue and the mixture was stirred for 30 min. Inorganic salts were filtered off to give after drying 72.6 g of dry cake (content of diacid in dry inorganic cake was 5.8 g (represents 4.3% of theoretical yield). The filtrate was extracted with ethyl acetate (2 x 100 ml). Aqueous phase 152 ml contain 24.1 g of the diacid (represents 17.8% of theoretical yield). The ethyl acetate layers were combined with previous extracts. Combined ethyl acetate extracts were evaporated to give 50.5 g of brownish oil.

### Comparative example 2 - zoledronic acid in PEG (Experiment related to US5908959)

To the reaction flask PEG 400 (50 ml), 2-(1*H*-imidazol-1-yl)acetic acid (6.0 g) and phosphorous acid (11.7 g) were charged. Reaction mixture was heated to 50°C and stirred for 15 min until all materials dissolved. The mixture was cooled down to 30°C and phosphorus trichloride (19.6 g) was added over 30 min (reaction is exothermic, max. temperature was 50°C). Very viscous reaction mixture is formed during addition of PCl₃ and the mixture tends to foam as hydrogen chloride is liberated in the mixture. The mixture was then heated to 60°C and stirred at this temperature for 4 hours. The mixture was cooled down to 40°C at which point very viscous difficult-to-stir solution was formed. Water (80 ml) was slowly added and resulting mixture was heated to 80°C. The mixture was stirred at this temperature for 4 hours.

The mixture was then cooled to 20°C and ethanol (150 ml) was added. The precipitate was filtered off, washed with ethanol (1 x 20 ml) and dried at 50°C for 15 hours to give 4.32 g (31.3%) of zoledronic acid monohydrate.

### Comparative example 3 - zoledronic acid in PEG (Experiment related to US5908959)

To the reaction flask, PEG 400 (50 ml), 2-(1*H*-imidazol-1-yl)acetic acid (6.0 g), and phosphorous acid (11.7 g) were charged. Reaction mixture was heated to 50°C and stirred for 15 min until all materials dissolved. The mixture was cooled down to 30°C and phosphorus oxychloride (13.1 ml) was added over 30 min (reaction is exothermic, max. temperature was 50°C). Very viscous reaction mixture is formed during addition of POCl₃ and the mixture tends to foam as hydrogen chloride is liberated in the mixture. The mixture was then heated to 95-100°C and stirred at this temperature for 4 hours. The mixture was cooled down to 40°C at which point very viscous difficult-to-stir solution was formed. Water (80 ml) was slowly added and resulting mixture was heated to 80°C. The mixture was stirred at this temperature for 4 hours.

The mixture was then cooled to 20°C and ethanol (150 ml) was added. The precipitate was filtered off, washed with ethanol (1 x 20 ml) and dried at 50°C for 15 hours to give 4.54 g (32.9%) of zoledronic acid monohydrate.

### Comparative example 4 - Preparation of zoledronic acid in an alkyl carbonate

7.44 g of phosphorous acid was suspended in 35 ml of diethyl carbonate at 40°C. The reaction mixture was stirred for 1 hour but phosphorous acid was not dissolved. 2-(1*H*-imidazol-1-yl)acetic acid (3.0 g) was added while stirring and the reaction mixture was maintained at 40°C. The resulting suspension contained sticky pieces of unsuspended material (poor stirrability). Phosphorus oxychloride (8.3 ml) was added. The reaction mixture was heated to 85°C and stirred at 80-90°C for 3 hours. Water (40 ml) was gradually added to the reaction mixture under stirring (hydrogen chloride is liberated). Pieces of starting materials remained undissolved until water was added to the reaction mixture. The reaction mixture was refluxed for 17 hours, cooled down to 0°C and the product was precipitated by addition of ethanol (130 ml).The precipitate was filtered off, washed with ethanol (1 x 20 ml) and dried at 60°C for 17 hours to give 4.05 g (59%) of zoledronic acid monohydrate.

### Example 4

### Preparation of zoledronic acid.

7.44 g of phosphorous acid was dissolved at 40°C in a mixture of 20 ml of propylene carbonate and 15 ml of PEG400. 2-(1*H*-imidazol-1-yl)acetic acid (3.0 g) was added while stirring and the reaction mixture was heated to 40°C. 8.3 ml of phosphorus oxychloride was added to the resulting solution. The reaction mixture was heated to 80°C and stirred at 80-90°C for 3 hours.

Water (40 ml) was gradually added to the reaction mixture under stirring (hydrogen chloride is liberated). The reaction mixture was stirred at 85°C for 20 hours, cooled down to 0°C and the product was precipitated by addition of ethanol (130 ml).The precipitate was filtered off, washed with ethanol (1x 20 ml) and dried at 60°C for 20 hours to give 5.81 g (84%) of zoledronic acid monohydrate.

### Example 5

### Preparation of zoledronic acid.

To a mixture of 20 ml of diethyl carbonate and 15 ml of PEG400, 7.44 g of phosphorous acid was introduced at 40°C. White emulsion was formed. 2-(1*H*-imidazol-1-yl)acetic acid (3.0 g) was added while stirring and the reaction mixture was heated to 40°C. To the resulting suspension was added 8.3 ml of phosphorus oxychloride. The reaction mixture was heated to 65°C and stirred at 70-90°C for 2 hours.

Water (40 ml) was gradually added to the reaction mixture under stirring (hydrogen chloride is liberated). The reaction mixture was stirred at 85°C for 17 hours, cooled down to 0°C and the product was precipitated by addition of ethanol (130 ml).The precipitate was filtered off, washed with ethanol (1 x 20 ml) and dried at 50°C for 20 hours to give 5.21 g (75%) of zoledronic acid monohydrate.

### Example 6

### Preparation of zoledronic acid.

A 2L jacketed reactor was charged with PEG 400 (200 ml) and propylene carbonate (200ml), (1*H*-imidazol-1-yl)acetic acid (60 g) was added followed by phosphorous acid (117 g) and propylene carbonate (200 ml). The mixture was heated to 43°C and strirread at 40-45°C to complete dissolution of reactants. Temperature of the mixture was adjusted to 30°C and phosphorous trichloride (196.0 g) was slowly added. Temperature of the reaction mixture was then adjusted to 58°C and the mixture was stirred at 56-60°C for 4 hours. Reaction mixture was then cooled to 30°C. A 4L jacketed reactor was charged with water (350 ml) and reaction mixture from the first reactor was transferred to this reactor. The 2L reactor was rinsed with water (450 ml) and the rinse was added to the 4L reactor. The mixture was heated to 83°C and then stirred at 80-85°C for 3 hours. The reaction mixture was then cooled down to 25°C. Ethanol (1 500 ml) was added over 45-60 min. Resulting suspension was cooled down to 10°C and was then stirred at 8-12 °C for 120 minutes. Product was then filtered, washed with ethanol (2x200 ml). Wet cake was dried at 57-62°C to give 105 g of zoledronic acid monohydrate. Water content 7.69%, HPLC purity 99.6%, assay by alkalimetric titration 100.9%.

### Example 7

### Preparation of zoledronic acid.

In a mixture of 20 ml of propylene carbonate and 15 ml of PEG 600 was dissolved 7.44 g of phosphorous acid at 40°C. 2-(1*H*-imidazol-1-yl)acetic acid (3.0 g) was added while stirring and the reaction mixture was heated to 40°C. To the resulting solution was added 9 ml of phosphorus trichloride. The reaction mixture was heated to 60°C and stirred at 55-60°C for 4 hours.

Water (40 ml) was gradually added to the reaction mixture under stirring (hydrogen chloride is liberated). The reaction mixture was stirred at 85°C for 18 hours, cooled down to 0°C and the product was precipitated by addition of ethanol (150 ml).The precipitate was filtered off, washed with ethanol (1 x 40 ml) and dried at 60°C for 10 hours to give 6.85 g (99%) of zoledronic acid monohydrate.

### Example 8

### Preparation of zoledronic acid.

In a mixture of 20 ml of propylene carbonate and 15 ml of PEG 1 000 was dissolved 7.44 g of phosphorous acid at 50°C. 2-(1*H*-imidazol-1-yl)acetic acid (3.0 g) was added while stirring and temperature of reaction mixture was adjusted to 40°C. To the resulting solution was added 9 ml of phosphorus trichloride. The reaction mixture was heated to 60°C and stirred at 55-60°C for 4 hours.

Water (40 ml) was gradually added to the reaction mixture under stirring (hydrogen chloride is liberated). The reaction mixture was stirred at 85°C for 18 hours, cooled down to 0°C and the product was precipitated by addition of ethanol (150 ml).The precipitate was filtered off, washed with ethanol (1 x 40 ml) and dried at 60°C for 10 hours to give 6.75 g (98%) of zoledronic acid monohydrate.

### Example 9

### Purification of Zoledronic acid

Erlenmeyer flask was charged with water (195 ml) and sodium hydroxide (35.85 g) and the mixture was stirred to dissolve NaOH. Zoledronic acid monohydrate (65.0 g) was added and the mixture was stirred until dissolution of zoledronic acid. Suspension of charcoal (3.25 g) in water (19.5 ml) was added and the mixture was stirred for 15 min. The charcoal was then filtered off, the filter cake was washed twice with water (26 ml and 19.5 ml). Jacketed 2L glass reactor was charged with water (276 ml) and hydrochloric acid (36.6%, 89.36 g). The filtrate was gradually added over approx. 45 min. Formed suspension was cooled down to 0°C and stirred for additional two hours. The product was then filtered, washed on filter with water (65 ml) and ethanol (130 ml). The product was then dried at 60°C to give 59.57 g (91.7%) of zoledronic acid monohydrate.

### Example 10

### Purification of Zoledronic acid

Opalescent solution of zoledronic acid prepared from 130.86 g zoledronic acid monohydrate, 61 g of sodium hydroxide and 1100 ml of water was boiled with 10g of charcoal for 5 minutes. The charcoal was then filtered off and the filter cake was washed with hot water (100 ml). The solution of 36% hydrochloric acid (260 ml) was quickly added to combined filtrates. Formed suspension was cooled down to 5°C, the pH of suspension was adjusted to pH 1 by addition of sodium hydroxide pearls, and stirred for additional two hours at 5°C. The product was then filtered, washed on filter with water (100 ml). The product was then dried at 50°C for 24 hours to give 108.13 g (82.6%) of zoledronic acid monohydrate.

### Example 11

Zoledronic acid monohydrate (6.0 g) was suspended in water (100 ml) and the mixture was heated to reflux. Formed solution was cooled down to 20°C and resulting crystalline suspension was stirred at 19-23°C for additional 1.5 hours. Product was the filtered, washed with ethanol (10 ml) and dried at 60°C to give 5.21 g (86.8%) of zoledronic acid monohydrate.

Each of the patents, patent applications, and journal articles mentioned above are incorporated herein by reference. The invention having been described it will be obvious that the same may be varied in many ways and all such modifications are contemplated as being within the scope of the invention as defined by the following claims.

## Claims

1. A process, which comprises:
reacting in a solvent/diluent a compound of formula (2) or a salt or ester thereof 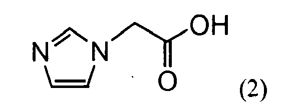 with a phosphonation agent to form phosphonated intermediates; and subsequently
hydrolyzing said intermediates to form a compound of formula (1) or a salt or hydrate thereof 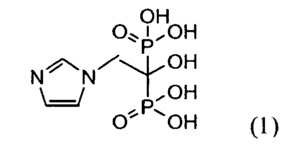
wherein said solvent/diluent comprises a mixture of (i) a polyalkylene glycol and (ii) a cyclic carbonate of the formula (3) 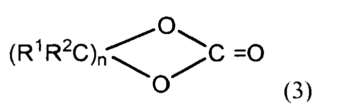 wherein n is an integer from 2 to 4, and R¹ and R² each independently represent a hydrogen or a C1-C4 alkyl group.

2. The process according to claim 1, wherein said polyalkylene glycol and said cyclic carbonate are present in a ratio of 1:5 to 2: 1 (v/v), respectively.

3. The process according to claim 1 or 2 wherein n in formula (3) is 3.

4. The process according to claims 1-3, wherein said polyalkylene glycol is polyethylene glycol, preferably of a relative molecular mass of about 200 to about 1000.

5. The process according to claim 1-4, wherein said solvent/diluent consists essentially of polyethylene glycol and a propylene carbonate of formula (3a), 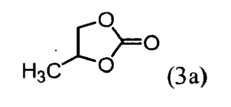 preferably in a ratio within the range of 1:3 to 3:4 (v/v).

6. The process according to claims 1-5, wherein said phosphonation agent comprises phosphorous acid and a halophosphorous compound, preferably phosphorous trichloride.

7. The process according to claims 1-6, wherein said reaction is carried out within the temperature range of 40°C to 80°C.

8. The process according to claims 1-7, wherein the amount of said solvent/diluent is 2-10ml per mg of said compound of formula (2).

9. The process according to claims 1-8, wherein said compound of formula (2) contains less than 0.5% of the impurity of formula (2b) 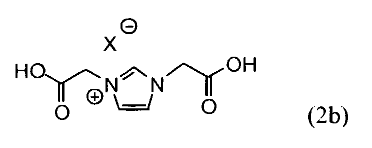 wherein X represents a counterion.

10. The process according to claims 1-9, wherein said hydrolyzing comprises contacting said intermediates with water, preferably at a temperature of at least 50°C.

11. The process according to claims 1-10, which further comprises isolating said compound of formula (1) or a salt or hydrate thereof, preferably via precipitation.

12. The process according to claim 11, which further comprises purifying said compound of the formula (1) by a recrystallization from an aqueous medium.

13. Use of a polyalkylene glycol and a cyclic carbonate of the formula (3) for making a compound of formula (1) or a salt or hydrate thereof.

## Patentansprüche

1. Verfahren, das umfasst:
Reagieren von Verbindung (2) oder einem Salz oder Ester davon 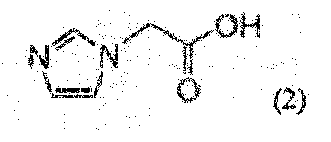 mit einem Phosphonationsmittel in einem Lösemittel/Verdünnungsmittel, um phosphonatisierte Zwischenprodukte zu bilden; und anschließend
Hydrolysieren der Zwischenprodukte, um eine Verbindung der Formel (1) oder ein Salz oder Hydrat davon zu bilden 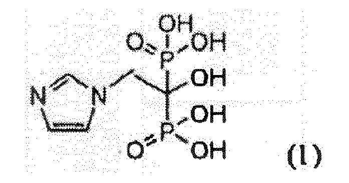
wobei das Lösemittel/Verdünnungsmittel eine Mischung von (i) einem Polyalkylenglykol und (ii) einem cyclischen Carbonat der Formel (3) 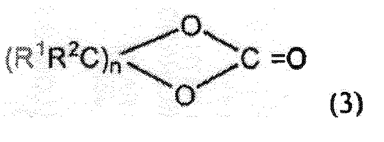 umfasst, wobei n eine ganze Zahl von 2 bis 4 darstellt, und R¹ und R² jeweils unabhängig Wasserstoff- oder eine C₁-C₄-Gruppe darstellen.

2. Verfahren nach Anspruch 1, wobei das Polyalkylenglykol beziehungsweise das cyclische Carbonat in einem Verhältnis von 1:5 bis 2:1 (Vol/Vol) vorliegen.

3. Verfahren nach Anspruch 1 oder 2, wobei n in Formel (3) 3 ist.

4. Verfahren nach Ansprüchen 1-3, wobei das Polyalkylenglykol Polyethylenglykol ist, vorzugsweise mit einem relativen Molekulargewicht von etwa 200 bis etwa 1000.

5. Verfahren nach Anspruch 1-4, wobei das Lösemittel/Verdünnungsmittel im Wesentlichen aus Polyethylenglykol und einem Propylencarbonat der Formel (3a) 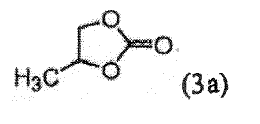 besteht, vorzugsweise in einem Verhältnis im Bereich von 1:3 bis 3:4 (Vol/Vol).

6. Verfahren nach Anspruch 1-5, wobei das Phosphonationsmittel phosphorige Säure und eine halophosphorige Verbindung, vorzugsweise Phosphortrichlorid, umfasst.

7. Verfahren nach Ansprüchen 1-6, wobei die Reaktion im Temperaturbereich von 40°C bis 80°C durchgeführt wird.

8. Verfahren nach Ansprüchen 1-7, wobei die Menge des Lösemittels/Verdünnungsmittels 2-10 ml pro mg der Verbindung von Formel (2) beträgt.

9. Verfahren nach Ansprüchen 1-8, wobei die Verbindung der Formel (2) weniger als 0,5 % der Verunreinigung von Formel (2b) 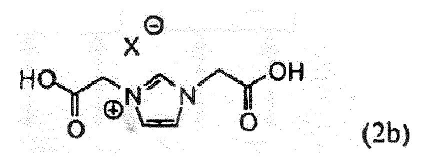 enthält, wobei X ein Gegenion darstellt.

10. Verfahren nach Ansprüchen 1-9, wobei das Hydrolysieren in Kontakt bringen der Zwischenprodukte mit Wasser, vorzugsweise bei einer Temperatur von mindestens 50°C, umfasst.

11. Verfahren nach Ansprüchen 1-10, des Weiteren umfassend Isolieren der Verbindung von Formel (1) oder einem Salz oder Hydrat davon, vorzugsweise durch Präzipitation.

12. Verfahren nach Anspruch 11, des Weiteren umfassend Reinigen der Verbindung der Formel (1) durch eine Rekristallisation aus einem wässrigen Medium.

13. Verwendung eines Polyalkylenglykols und eines cyclischen Carbonats der Formel (3), zum Herstellen eine Verbindung der Formel (1) oder ein Salz oder Hydrat davon.

## Revendications

1. Un procédé qui comprend:
■ la réaction, dans un solvant/diluant, d'un composé de formule (2) ou d'un de ses sels ou dérivés ester 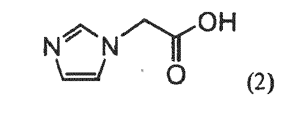 avec un agent de phosphonation pour former des intermédiaires phosphonatés; et ensuite
■ l'hydrolyse desdits intermédiaires pour former un composé de formule (1) ou un de ses sels ou hydrates 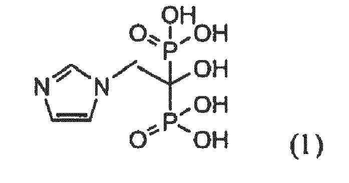 procédé dans lequel ledit solvant/diluant comprend un mélange de
(i) un polyalkylène glycol et
(ii) un carbonate cyclique de formule (3) 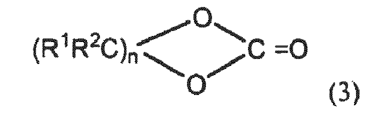
dans laquelle n est un entier de 2 à 4 et R¹ et R² représentent, indépendamment l'un de l'autre, un atome d'hydrogène ou un radical alkyle en C₁ à C₄.

2. Le procédé selon la revendication 1, dans lequel ledit polyalkylène glycol et ledit carbonate cyclique sont présents selon un ratio de 1:5 à 2:1 (v/v), respectivement.

3. Le procédé selon la revendication 1 ou la revendication 2, dans lequel, dans la formule (3), n est égal à 3.

4. Le procédé selon les revendications 1 à 3, dans lequel ledit polyalkylène glycol est du polyéthylène glycol, de préférence d'une masse moléculaire relative d'environ 200 à environ 1000.

5. Le procédé selon les revendications 1 à 4, dans lequel ledit solvant/diluant consiste essentiellement en polyéthylène glycol et en carbonate de propylène de formule (3a) 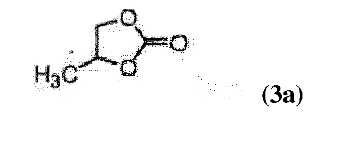 de préférence selon un ratio dans la gamme 1:3 à 3:4 (v/v).

6. Le procédé selon les revendications 1 à 5, dans lequel lesdits agents de phosphonation comprennent l'acide phosphoreux et un composé halogénophosphoreux, de préférence le trichlorure phosphoreux.

7. Le procédé selon les revendications 1 à 6, dans lequel ladite réaction est mise en oeuvre dans la gamme de température de 40°C à 80°C.

8. Le procédé selon les revendications 1 à 7, dans lequel la quantité dudit solvant/diluant est de 2 à 10 ml par mg dudit composant de formule (2).

9. Le procédé selon les revendications 1 à 8, dans lequel ledit composé de formule (2) contient moins de 0,5 % d'impuretés de formule (2b) 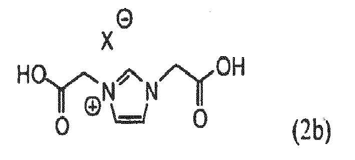 dans laquelle X représente un contre ion.

10. Le procédé selon les revendications 1 à 9, dans lequel ladite hydrolyse comprend le contact desdits intermédiaires avec de l'eau, de préférence à une température d'au moins 50°C.

11. Le procédé selon les revendications 1 à 10, qui comprend en outre l'isolation dudit composé de formule (1) ou d'un de ses sels ou hydrates, de préférence par précipitation.

12. Le procédé selon la revendication 11, qui comprend en outre la purification dudit composé de formule (1) par recristallisation dans un milieu aqueux.

13. Utilisation d'un polyalkylèneglucol et d'un carbonate cyclique de formule (3) pour la fabrication d'un composé de formule (1) ou d'un de ses sels ou hydrates.
